# EUROPEAN PATENT APPLICATION

(11) **EP 3 493 391 A1**
(43) Date of publication of application: **05.06.2019**
(21) Application number: 17204647.6
(22) Date of filing: 30.11.2017
(51) Int. Cl.: H02M 7/483

(54) **SINGLE PHASE SEVEN LEVEL CONVERTER**

(71) Applicant: Siemens Aktiengesellschaft, 80333 München (DE)
(72) Inventor: Mondal, Gopal, 91058 Erlangen (DE)

(57) **Abstract**

Single phase converter for converting between a AC voltage and a DC voltage, comprising
- a first, second, third and fourth DC connection terminal,
- a first and second electrical node,
- a first and second AC connection terminal,
- a first to eighth semiconductor switch,
- a controlling means for controlling the semiconductor switches,
wherein
- the first semiconductor switch is arranged between the first DC connection terminal and the first node,
- the second semiconductor switch is arranged between the second DC connection terminal and the first node,
- the third, fourth, fifth and sixth semiconductor switch are arranged as a full bridge and connected between the first and second node,
- the seventh semiconductor switch is arranged between the third DC connection terminal and the second node,
- the eighth semiconductor switch is arranged between the fourth DC connection terminal and the second node
- a first half-bridge midpoint of the full bridge is connected to the first AC connection terminal and a second half-bridge midpoint of the full bridge is connected to the second AC connection terminal.

## Description

The present invention relates to an electrical converter and, more particularly, to a single phase seven level converter.

Conventional single phase converters require comparatively large passive components to meet requirements on harmonic content. Several multi level topologies have been proposed that reduce the harmonic content of the output voltage and therefore the necessary passive components. For a number n of output voltage levels conventional converters generally use n-1 series capacitors and 2(n-1) switches.

The objective of the present invention is to provide a single phase seven level converter with a reduced number of switches.

A single phase converter in accordance with the invention comprises a first, second, third and fourth DC connection terminal, a first and second electrical node and a first and second AC connection terminal. It further comprises a first to eighth semiconductor switch and a controlling means for controlling the semiconductor switches. In the converter, a first semiconductor switch is arranged between the first DC connection terminal and the first node, a second semiconductor switch is arranged between the second DC connection terminal and the first node, a third, fourth, fifth and sixth semiconductor switch are arranged as a full bridge and connected between the first and second node, a seventh semiconductor switch is arranged between the third DC connection terminal and the second node, an eighth semiconductor switch is arranged between the fourth DC connection terminal and the second node and a first half-bridge midpoint of the full bridge is connected to the first AC connection terminal and a second half-bridge midpoint of the full bridge is connected to the second AC connection terminal.

Advantageously the converter is able to provide a seven level output thus reducing the harmonic content of the output voltage and therefore enabling the use of smaller filter elements. The converter uses as few as eight switches and only four DC link terminals, i.e. three DC link series capacitors thus reducing the cost and size of the converter.

Further features that may be added alone or together in exemplary embodiments of the invention include:
- The controlling means may take the form of a microcontroller such as an FPGA or another form of integrated circuit. It may also be realized as a program on a computer. It may be adapted to control the switches so that the converter acts as a seven level converter using seven distinct voltage levels. It may further be adapted to control the semiconductor switches in such way that changing the voltage level by one requires switching off one switch and switching one other switch. Advantageously this reduces switching losses.
- The semiconductor switches may be IGBTs or MOSFETs or other fully controllable switches. The switches may also be a mixture of different types of switch.
- When the voltage of the full DC link, i.e. the voltage between the first and fourth DC connection terminal is described as 3*U, the voltage rating of the first, second seventh and eighth switch may be at least the voltage U. The voltage rating of the third, fourth, fifth and sixth switch may be at least 3*U.
- The converter may comprise a first DC link capacitor between the first and second DC connection terminal, a second DC link capacitor between the second and third DC connection terminal and a third DC link capacitor between the third and fourth DC connection terminal.
- The controlling means may be adapted to perform a charge balancing algorithm for the DC link capacitors, wherein the for at least one voltage level the charge balancing algorithm uses two different switching states of the semiconductor switches for the same voltage level to charge and discharge the DC link capacitors.
- The controlling means may be adapted to provide two different switching states of the semiconductor switches for voltage levels equal to 0 V, +2*U and -2*U.
- The converter may be used as an AC/DC converter (rectifier) or as a DC/AC converter (inverter). The converter can also be used in applications with a bi-directional power flow.
- Two such converters may be connected to form a DC/DC converter. The two converters are connected with their respective AC connection terminals.

Further benefits and advantages of the present invention will become apparent from the detailed description with appropriate reference to the accompanying drawings. In the drawings:
- figure 1: is a schematic diagram of an embodiment of the converter,
- figure 2: is a switching state table for the switches of the converter,
- figure 3: is a schematic diagram of a DC/DC converter.

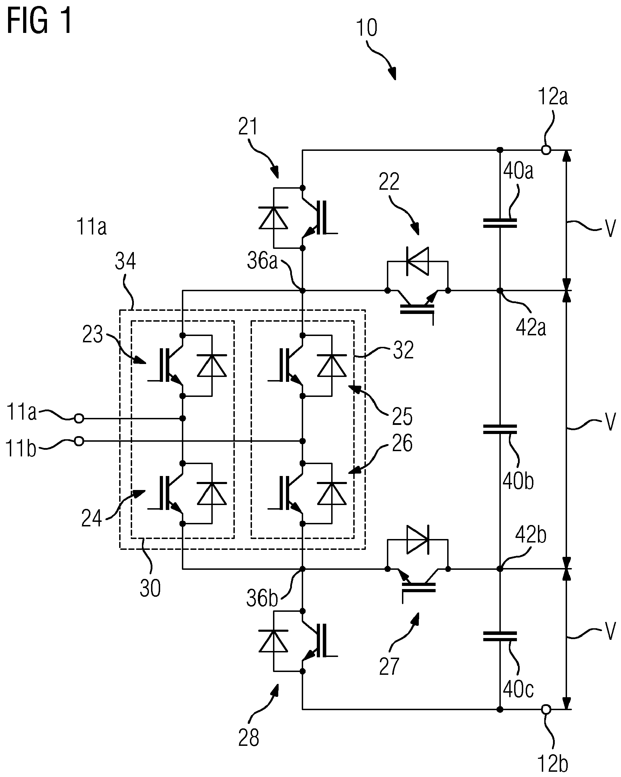

The schematic diagram of figure 1 shows an embodiment of the invention. A converter 10 is built using a first to eighth switch 21...28 and three DC link capacitors 40a...c. The converter 10 is arranged to work as an AC/DC converter, i.e. as a rectifier. An AC voltage may be applied to AC connection terminals 11a, 11b. The converter 10 converts the AC voltage to an approximated DC voltage across DC connection terminals 12a, 12b. The DC voltage is spread over the three DC link capacitors 40a...c which are arranged in series between the DC connection terminals 12a, 12b. The midpoint between the first and second DC link capacitor 40a, 40b forms upper DC node 42a while the midpoint between the second and third DC link capacitor 40b, 40c forms lower DC node 42b.

A first of the AC connection terminals 11a is connected to the midpoint of a first half-bridge 30 comprising the third and fourth switch 23, 24 connected in series. A second of the AC connection terminals 11b is connected to the midpoint of a second half-bridge 32 comprising the fifth and sixth switch 25, 26 connected in series. The upper terminals of the half-bridges 30, 32 are connected to form a first node 36a. The lower terminals of the half-bridges 30, 32 are connected to form a second node 36b. The half-bridges 30, 32 are thus arranged to form a full bridge 34.

The first switch 21 is arranged between the first node 36a and the upper DC connection terminal 12a. The second switch 22 is arranged between the first node 36a and the upper DC node 42a. The seventh switch 27 is arranged between the second node 36b and the lower DC node 42b. The eighth switch 28 is arranged between the second node 36b and the lower DC connection terminal 12b.

During operation the switches 21...28 are turned on and off to create ideally equal voltages V across each of the Dc link capacitors. The resulting voltage stress is different for different of the switches 21...28. The voltage rating of the first, second, seventh and eighth switch 21, 22, 27, 28 should be equal to at least the voltage V. The voltage rating of the remaining switches 23...26, i.e. the switches 23...26 of the full bridge 34 should be equal to at least three times the voltage V. If, for example, a DC voltage is 650 V is maintained by the converter 10 between the DC connection terminals 12a, 12b, the voltage rating of the switches 23...26 of the full bridge 34 should be at least 650 V while the voltage rating of the remaining switches 21, 22, 27, 28 should be at least ∼ 217 V.

Apart from the elements shown in figure 1 converter 10 also comprises a controller, e.g. in the form of a microprocessor. The controller is connected to the switches and operates the switches 21...28 to enable converter 10 to act as a rectifier. In other embodiments, when converter 10 acts as an inverter, i.e. as a DC/AC converter, the controller operates the switches to enable the inverter function. In all cases converter 10 can differentiate between seven voltage levels at and between the maximum positive and maximum negative voltage. In other words, between the maximum positive and negative voltage five additional voltages can be addressed.

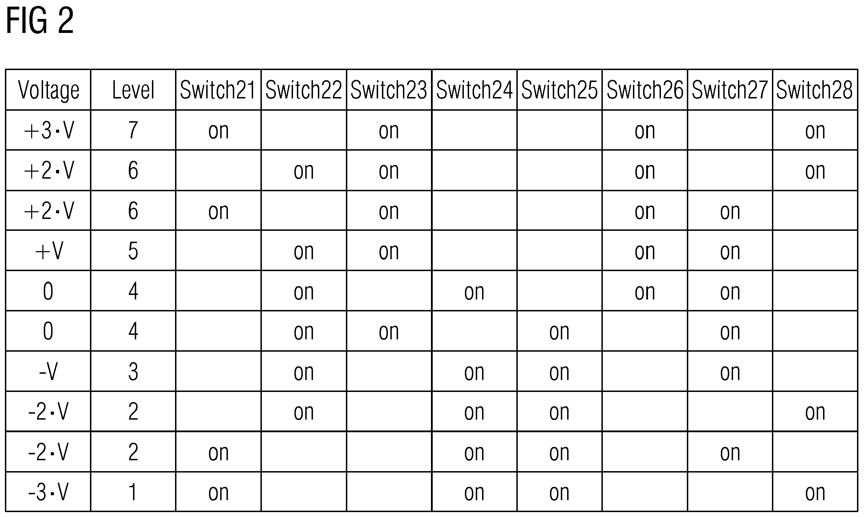

Figure 2 shows how the switches 21...28 are turned on and off based on the instantaneous voltage or level. The voltage is referred to using the voltage V across one of the DC link capacitors 40a...c, i.e. one third of the total DC voltage. Thus the voltages vary between +3·V and -3·V. To address a voltage of +3·V the first, third, sixth and eighth switch 21, 23, 26, 28 have to be turned on with the remaining switches 22, 24, 25, 27 turned off.

It may be seen from figure 2 that the differences between the switch states for adjacent levels are small. In most cases only one switch needs to be turned off and one further switch needs to be turned on. Thus the switching losses of converter 10 are advantageously low.

Two of the voltages, namely +2·V and -2·V, levels 2 and 6, may be addressed using two different combinations of switches 21...28. In each case either the upper two of the lower two DC link capacitors 40a...c are combined to address the voltage. The controller can use these voltage levels and the different combinations of switches 21...28 to maintain a charge balance for the capacitors 40a...c. For levels 2 and 6, the controller may choose one of the two possible combinations of switches 21...28 to either charge or discharge the capacitors 40a...c depending on their current charge state. A balancing algorithm may be used to advantageously use the different current paths of levels 2 and 6 to balance the charge of capacitors 40a...c. Since the middle capacitor 40b is always in the current path the algorithm may need to deviate from the ideal switching state to keep the charges within prescribed margins.

For example, it may be seen from figures 1 and 2 that when a voltage of +2·V is addressed using switches 21, 23, 26 and 27 a current flow into the second AC connection terminal 11b and out of the first AC connection terminal 11a will discharge the upper and middle DC link capacitor 40a, 40b. A current flow of opposite direction will charge the same DC link capacitors 40a, 40b.

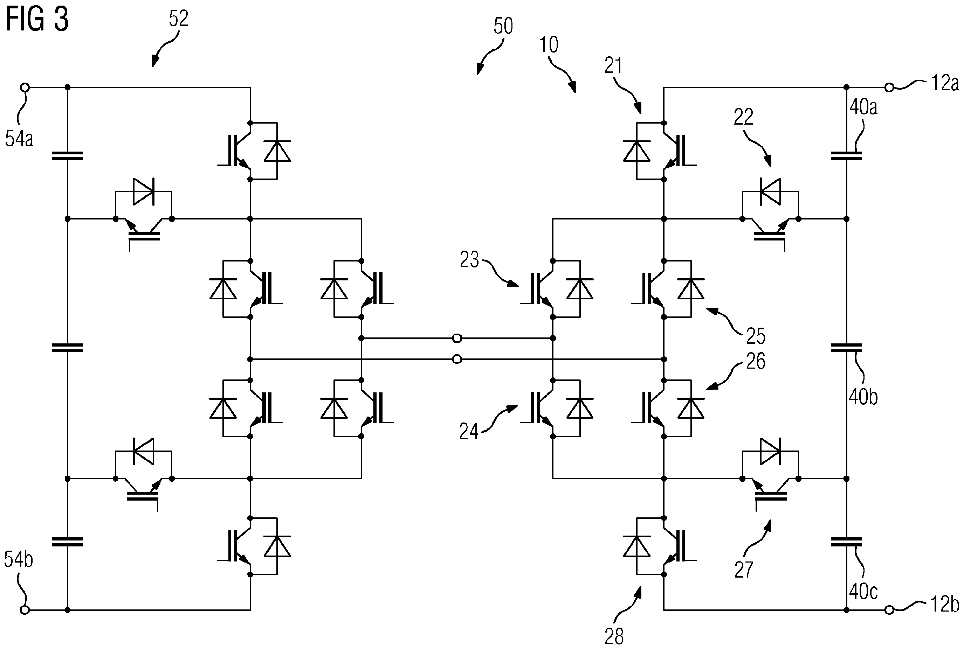

Figure 3 shows a schematic diagram of a DC/DC converter 50 using converter 10 and an additional converter 52. Converter 10 and the additional converter 52 are connected at their respective AC connection terminals. As shown in figure 3 additional converter 52 is built similarly to converter 10. The outside connections of DC/DC converter are the DC connection terminals 12a, 12b of converter 10 and additional DC connection terminals 54a, 54b of the additional converter 52.

Thus DC/DC converter 50 converts a DC voltage using an intermediate seven level AC voltage. The power flow in the DC/DC converter 50 as well as in AC/DC converter 10 or in a DC/AC converter configuration may always be bi-directional. So all terminals 12a, 12b, 11a, 11b, 54a, 54b may be considered input terminals as well as output terminals.

## Claims

1. Single phase converter (10) for converting between a AC voltage and a DC voltage, comprising
- a first, second, third and fourth DC connection terminal (12a, 12b, 42a, 42b),
- a first and second electrical node (36a, 36b),
- a first and second AC connection terminal (11a, 11b),
- a first to eighth semiconductor switch (21...28),
- a controlling means for controlling the semiconductor switches (21...28),
wherein
- the first semiconductor (21) switch is arranged between the first DC connection terminal (12a) and the first node (36a),
- the second semiconductor (22) switch is arranged between the second DC connection terminal (42a) and the first node (36a),
- the third, fourth, fifth and sixth semiconductor (23...26) switch are arranged as a full bridge (34) and connected between the first and second node (36a, 36b),
- the seventh semiconductor (27) switch is arranged between the third DC connection terminal (42b) and the second node (36b),
- the eighth semiconductor switch (28) is arranged between the fourth DC connection terminal (12b) and the second node (36b),
- a first half-bridge midpoint of the full bridge (34) is connected to the first AC connection terminal (11a) and a second half-bridge midpoint of the full bridge (34) is connected to the second AC connection terminal (11b).

2. Single phase converter (10) according to claim 1, wherein the controlling means is adapted to control the switches (21...28) so that the converter (10) acts as a seven level converter using seven distinct voltage levels.

3. Single phase converter (10) according to claim 2, wherein the controlling means is adapted to control the semiconductor switches (21...28) in such way that changing the voltage level by one requires switching off one semiconductor switch (21...28) and switching one other semiconductor switch (21...28).

4. Single phase converter (10) according to one of the preceding claims, wherein the semiconductor switches (21...28) are IGBTs or MOSFETs.

5. Single phase converter (10) according to one of the preceding claims, wherein the third, fourth, fifth and sixth semiconductor switch (23...26) have a voltage rating that is different from the voltage rating of the first, second, seventh and eighth semiconductor switch (21, 22, 27, 28).

6. Single phase converter (10) according to one of the preceding claims, further comprising a first DC link capacitor (40a) between the first and second DC connection terminal (12a, 42a), a second DC link capacitor (40b) between the second and third DC connection terminal (42a, 42b) and a third DC link capacitor (40c) between the third and fourth DC connection terminal (42b, 12b).

7. Single phase converter (10) according to claim 5, wherein the controlling means is adapted to perform a charge balancing algorithm for the DC link capacitors (40a...c), wherein the for at least one voltage level the charge balancing algorithm uses two different switching states of the semiconductor switches (21...28) for the same voltage level to charge and discharge the DC link capacitors (40a...c).

8. Single phase converter (10) according to claim 7, wherein the controlling means is adapted to provide two different switching states of the semiconductor switches (21...28) for voltage levels equal to 0 V, 2/3 and -2/3 of the DC link voltage.

9. DC/DC converter (50) comprising a first and a second converter (10) according to one of the preceding claims, wherein the first and second converter (10) are connected with their respective AC connection terminals (11a, 11b).
